# FASCICULE DE BREVET EUROPEEN

(11) **EP 2 144 098 B1**
(45) Date de publication et mention de la délivrance du brevet: **12.10.2011**
(21) Numéro de dépôt: 09164816.2
(22) Date de dépôt: 07.07.2009
(51) Int. Cl.: G02B 6/122, G02B 6/30, G02B 6/13

(54) **Guide d'onde planaire à base de cristal photonique comportant un adaptateur de modes guidés et système optique comportant le guide d'onde couplé avec une fibre optique**
Planarer Wellenleiter mit photonischem Kristall mit einem Modenkonverter und optisches System mit dem Wellenleiter gekoppelt mit einer optischer Faser
Photonic crystal planar waveguide comprising a mode converter and optical system comprising the waveguide coupled to an optical fibre

(30) Priorité: 11.07.2008 FR 0803987
(43) Date de publication de la demande: 13.01.2010
(73) Titulaire: THALES, 92200 Neuilly-sur-Seine (FR)
(72) Inventeur: Combrie, Sylvain, 75014 Paris (FR); Tran, Nguyen Vy Quynh, tinh Dong Nai (VN); De Rossi, Alfredo, 75014 Paris (FR)
(74) Mandataire: Esselin, Sophie

(56) Documents cités:
- US-A1- 2006 039 649
- US-A1- 2008 089 640
- KOSAKA HIDEO ET AL: "Photonic-crystal spot-size converter" APPLIED PHYSICS LETTERS, AIP, AMERICAN INSTITUTE OF PHYSICS, MELVILLE, NY, vol. 76, no. 3, 17 janvier 2000 (2000-01-17), pages 268-270, XP012025675 ISSN: 0003-6951
- IKEDA N ET AL: "Coupling characteristic of micro planar lens for 2D photonic crystal waveguides" INDIUM PHOSPHIDE&RELATED MATERIALS, 2007. IPRM '07. IEEE 19TH INTERNAT IONAL CONFERENCE ON, IEEE, PI, 1 mai 2007 (2007-05-01), pages 484-486, XP031112617 ISBN: 9781424408740
- LIPSON M: "Controlling light on a microelectronics' chip: solving the coupling, modulation and switching challenges" GROUP IV PHOTONICS, 2004. FIRST IEEE INTERNATIONAL CONFERENCE ON HONG KONG, CHINA 29 SEPT.-1 OCT. 2004, PISCATAWAY, NJ, USA,IEEE, US, 29 septembre 2004 (2004-09-29), pages 16-18, XP010782169 ISBN: 9780780384743
- BOGAERTS W ET AL: "Basic structures for photonic integrated circuits in silicon-on-insulator" OPTICS EXPRESS OPT. SOC. AMERICA USA, vol. 12, no. 8, 19 avril 2004 (2004-04-19) , XP002519731 ISSN: 1094-4087
- ATTILA MEKIS ET AL: "Tapered Couplers for Efficient Interfacing Between Dielectric and Photonic Crystal Waveguides" JOURNAL OF LIGHTWAVE TECHNOLOGY, IEEE SERVICE CENTER, NEW YORK, NY, US, vol. 19, no. 6, 1 juin 2001 (2001-06-01), XP011029970 ISSN: 0733-8724
- BLUMENTHAL D J ET AL: "Transmission Measurement of Tapered Single-Line Defect Photonic Crystal Waveguides" IEEE PHOTONICS TECHNOLOGY LETTERS, IEEE SERVICE CENTER, PISCATAWAY, NJ, US, vol. 17, no. 10, 1 octobre 2005 (2005-10-01), pages 2092-2094, XP011139596 ISSN: 1041-1135

## Description

Le domaine de l'invention est celui des circuits à cristaux photoniques qui apportent des fonctions originales dans le domaine de la photonique : traitement tout-optique du signal, échantillonnage optique, ligne à retard, filtrage, capteur chimique, source de photons uniques.

Il s'agit de dispositifs optiques de très petite taille et de très faible consommation, particulièrement recherchés pour des applications dans le domaine des communications quantiques (cryptographie, calcul,..) ou pour l'intégration dite « extrême ».

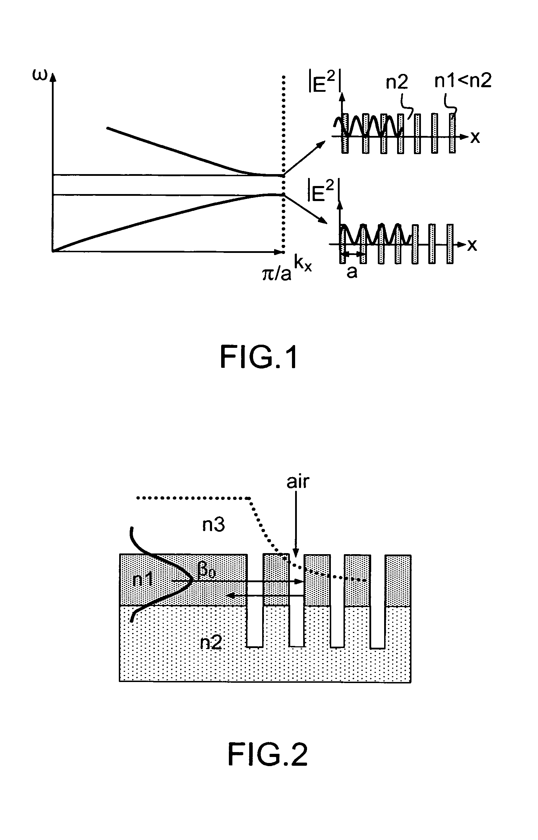

De manière générale, les cristaux photoniques sont des structures dont l'indice diélectrique varie de manière périodique à l'échelle de la longueur d'onde, sur une ou plusieurs directions de l'espace. La figure 1 illustre l'intensité du champ électrique d'une onde électromagnétique se propageant dans ce type de structure et montre le diagramme de dispersion d'une structure de période a dans la première zone de Brillouin ; le vecteur d'onde k est compris dans l'intervalle 0 < k < π / a. On sait structurer artificiellement des matériaux par exemple semiconducteurs pour mettre à profit les effets de diffraction permettant par la même d'élaborer des fonctions optiques passives et actives nécessaires par exemple aux réseaux de télécommunications sur fibre optique.

Par ailleurs un des attraits majeurs de ces structures reposent sur l'insertion contrôlée de défauts au sein du cristal. Ces défauts peuvent générer des états aux fréquences de bande interdite du cristal et ainsi permettre un champ électromagnétique propagatif pour ces fréquences. Un contrôle de la propagation de la lumière au sein du cristal et à l'échelle de la longueur d'onde est alors envisageable via ces défauts. L'utilisation de ces structures ouvre ainsi la voie à la miniaturisation des composants en optique intégrée.

Par rapport aux structures cristallines en trois dimensions, il a été montré qu'une structure en deux dimensions pouvait être particulièrement intéressante. On réalise dans ce cas, des cristaux dans une fine couche guidante semiconductrice ce qui permet un meilleur contrôle et une technologie plus aisée de réalisation compatible des technologies classiques de microélectronique.

On isole une couche très fine constituant ainsi une membrane pouvant typiquement présenter une épaisseur h de l'ordre de 150 nanomètres à 300 nanomètres pour les applications visant le domaine spectral entre environ 1 micron et 1.6 microns. Par une simple loi d'échelle, cette épaisseur est ajustée pour étendre l'application à d'autres domaines spectraux. La loi est la suivante : h est compris entre 0.1 et 0.3 fois la longueur d'onde. Le matériau utilisé peut typiquement être du silicium ou un matériau semiconducteur à base d'éléments des colonnes III et V de la table périodique de Mendeleyev (semiconducteurs « III-V », par exemple GaAs, AlGaAs, GaInP, InP, AlGaAsP,...).

Des matériaux envisageables également sont les semiconducteurs de la famille II-VI (par exemple le ZnO) ainsi que le SiN.

On crée au sein de ces membranes un guide d'onde avec une forte variation d'indice optique comme illustré en figure 2. On peut notamment régler la vitesse de propagation des ondes et la dispersion des modes guidés en faisant varier la taille des motifs.

En outre, ces dispositifs sont extrêmement compacts et peuvent être facilement intégrés. Cela implique une faible consommation, un poids et un volume très réduits, ce qui les rend très attrayants pour les applications embarquées. Cependant, la connexion avec une fibre est un point délicat et il n'existe pas à l'heure actuelle de solution simple et peu coûteuse permettant de répondre à ce problème majeur.

En effet il convient de réaliser une adaptation entre le mode guidé d'une fibre optique, dont la taille est typiquement de l'ordre de quelques centaines de microns carré (typiquement de l'ordre de 10µm de diamètre), avec celui d'un guide d'onde réalisé au sein d'un cristal photonique capable de confiner des modes dans des sections d'environ 0,2 *0,3 µm².

Il a notamment été proposé par des chercheurs d'IBM : Sharee J.McNab, Nikolaj Moll and Yurii A.Vlasov « Ultra-low loss photonic integrated circuit with membrane-type photonic crystal waveguides », OPTICS EXPRESS 2927, 3 November 2003/Vol 11, No.22, une technologie définissant un élément adjacent au cristal photonique et de section variable.

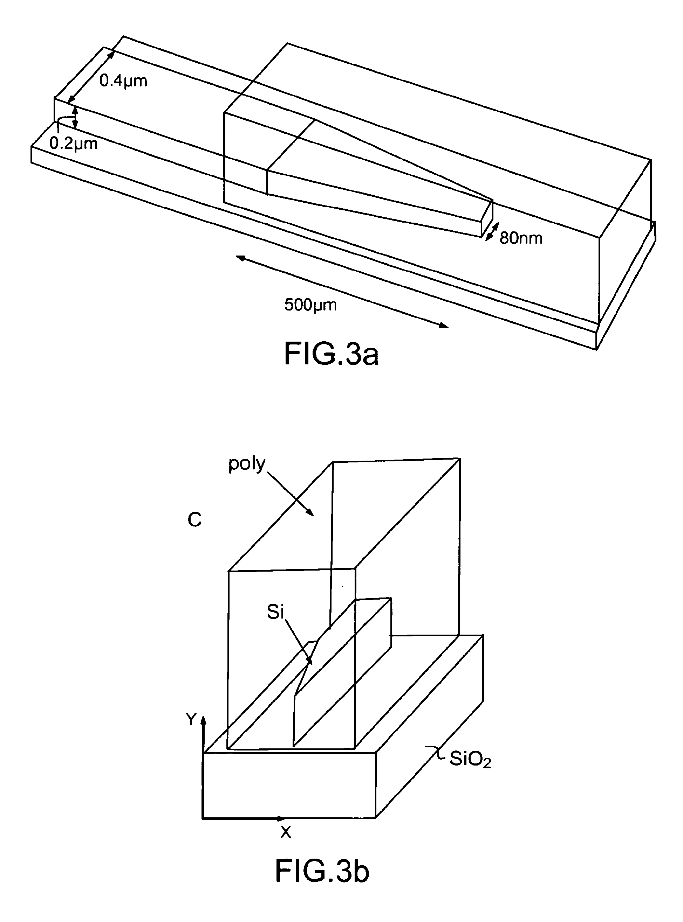

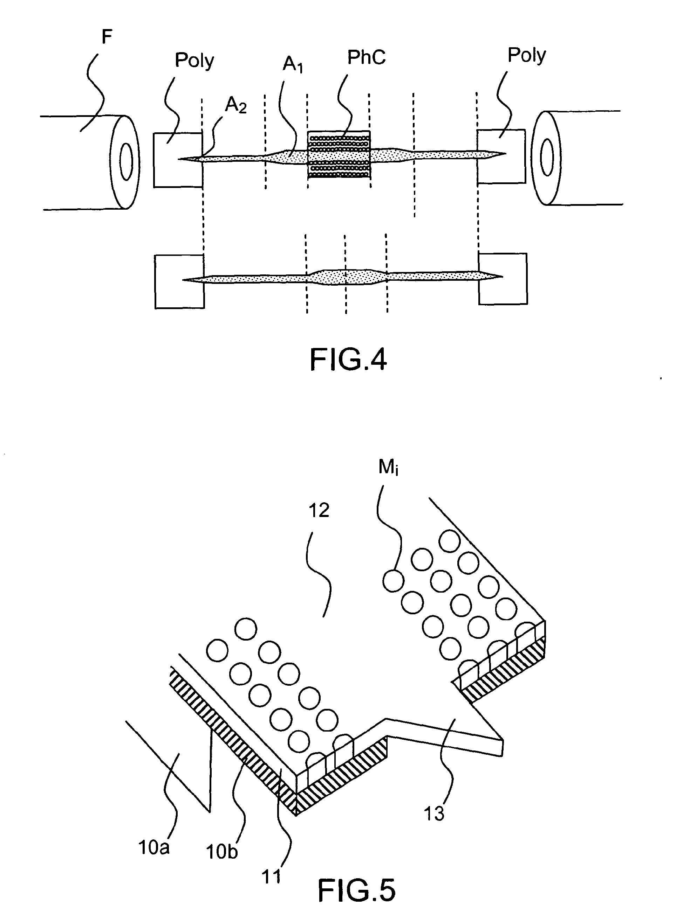

Cet élément en silicium Si est réalisé à la surface d'une couche d'oxyde SiO₂ et noyé dans du polymère référencé Poly. Il est ainsi possible de l'utiliser en tant qu'adaptateur. Les figures 3a et 3b illustrent cet élément adaptateur et la figure 4 représente la solution préconisée dans cet article qui consiste à faire une adaptation à trois étages entre les modes guidés des fibres F et ceux issus du cristal photonique PhC.

Selon cette technologie, un premier élément A₁ couple le mode du cristal photonique à celui d'un guide ruban suspendu. Une transition s'effectue alors vers un guide ruban reposant sur la couche sacrificielle à basse indice. Enfin un dernier élément A₂ adapte le mode optique de ce dernier à celui de la fibre optique F.

Les inconvénients d'une telle solution résident notamment dans :
- la complexité de la conception (deux adaptateurs de mode),
- la complexité de la réalisation (addition de plusieurs étapes technologiques et inclusion d'un matériau supplémentaire : polymère),
- les réflexions parasites pouvant apparaître à la transition entre le ruban suspendu et le ruban reposant sur le diélectrique (en particulier si celui-ci n'est pas bas indice),
- les réflexions parasites sur le substrat pouvant apparaître et dues à la divergence, même faible, du faisceau,
- la précision de clivage nécessaire pour éviter les précédentes réflexions,
- les effets de proximité durant la lithographie électronique provoqués par le changement de géométrie.

Par ailleurs, cette solution est réalisable sur un substrat de SiO₂ mais est difficilement applicable sur d'autres matériaux car la partie du guide en ruban doit être maintenue par un substrat à faible indice.

L'élément adaptateur à la surface de la couche de SiO₂ se trouve alors dans un environnement hétérogène. Il repose sur un substrat alors que sa surface supérieure n'est pas en contact avec le même type de matériau. Cette propriété crée une dissymétrie au niveau du confinement des modes optiques.

Il a été aussi proposé par une équipe d'université Japonaise : N. Ikeda, H. Kawashima, Y. Sugimoto, T. Hasama, K. Asakawa, H. Ishikawa « Coupling characteristic of micro planar lens for 2D photonic crystal waveguides » Conference Proceedings of IPRM (International Conference on Indium Phosphide and Related Materials) May 2007, une technologie définissant une lentille planaire placée à la terminaison d'un guide d'onde en cristal photonique. Cet élément, réalisé en GaAlAs est utilisé pour diminuer les pertes de couplage et les tolérances d'alignement tout en réduisant les réflexions parasites Fabry-Perot. Le problème principal de cette solution réside dans le fait que le faisceau rayonné n'est pas circulaire de part les facteurs géométriques de la micro-lentille ; cette technique ne permet pas de réduire la divergence dans le plan vertical.

Pour résoudre ce type de problème, la présente invention propose un adaptateur de mode qui transforme le mode du cristal photonique en un mode propagatif dans l'espace libre de type Gaussien avec une ouverture numérique telle qu'elle permette un couplage efficace avec une fibre optique au travers d'une optique adaptée standard (micro-lentille, fibre lentillée, lentille GRIN, micro-sphère).

Plus précisément l'invention a pour objet un circuit à cristal photonique comme défini dans la revendication 1.

Selon une variante la pointe dépasse du plan de clivage du substrat afin d'éviter les réflexions parasites sur celui-ci.

Selon une variante de l'invention, la membrane est en silicium.

Selon une variante de l'invention, la membrane est en matériau de type III-V tel que GaAs, GaAlAs, GaInP, InP, GaInAsP.

Selon une variante de l'invention, l'épaisseur de la membrane est comprise entre environ 100 nanomètres et 300 nanomètres pour des applications dans le domaine de 900nm à 1600nm.

Selon une variante de l'invention, le cristal photonique comporte des motifs présentant une périodicité de l'ordre de quelques centaines de nanomètres.

Selon une variante de l'invention, les motifs du cristal photonique sont des trous présentant des rayons de l'ordre de 120 à 130 nanomètres suivant la longueur d'onde de fonctionnement visée.

L'invention a aussi pour objet un procédé de fabrication d'un circuit à cristal photonique selon l'invention, caractérisé en ce qu'il comporte les étapes suivantes :
- la réalisation d'un sillon à la surface de la membrane simultanément à la définition du cristal photonique;
- une opération d'attaque chimique de la couche sacrificielle sous-gravant à la fois la pointe de couplage et les structures en cristal photonique ;
- une opération de clivage permettant de libérer la pointe constitutive de l'adaptateur au niveau du sillon préalablement réalisé.

Selon une variante de l'invention, l'opération de réalisation d'un sillon est effectuée sur une largeur de l'ordre d'une centaine de nanomètres.

L'invention a encore pour objet un système optique comportant un circuit à cristal photonique selon l'invention, une optique adaptative et une fibre optique.

Selon une variante de l'invention, l'optique adaptative est de type micro-lentille ou lentille de type GRIN (graded index).

L'invention sera mieux comprise et d'autres avantages apparaîtront à la lecture de la description qui va suivre donnée à titre non limitatif et grâce aux figures annexées parmi lesquelles :
- la figure 1 illustre l'intensité du champ électrique d'une onde électromagnétique se propageant dans ce type de structure et montre le diagramme de dispersion d'une structure de période a dans la première zone de Brillouin pour laquelle le vecteur d'onde k est compris dans l'intervalle 0 < k < π / a ;
- la figure 2 illustre une structure bidimensionnelle de cristal photonique comportant un guide d'onde ;
- les figures 3a et 3b illustrent des vues en perspective d'un élément adaptateur de mode selon l'art antérieur et en contact avec un substrat ;
- la figure 4 illustre un exemple de système optique intégrant des adaptateurs tels que ceux illustrés en figures 3a et 3b ;
- la figure 5 illustre un exemple de circuit à cristal photonique selon l'invention ;
- les figures 6a et 6b illustrent des exemples de structures de guide en cristal photonique respectivement sans pointe et avec double pointe ;
- la figure 7 illustre la transmission normalisée d'une section de guide pour les structures représentées en figures 6a et 6b ;
- les figures 8b et 8c illustrent les diagrammes de rayonnement dans le plan sagittal et dans le plan azimutal pour les structures représentées en figures 6a et 6b dans le repère de coordonnées polaires illustré en figure 8a ;
- les figures 9a à 9c illustrent les différentes étapes d'un exemple de procédé de fabrication d'un circuit à cristal photonique selon l'invention ;
- la figure 10 illustre un circuit à cristal photonique complexe avec des entrées-sorties basées sur la présente invention.

Selon l'invention, il est proposé un circuit à cristal photonique capable d'être couplé à une fibre optique standard et qui minimise les pertes lors de la transmission de photons depuis le cristal optique jusque dans la fibre.

Ce circuit comprend comme illustré en figure 5, une membrane 11 constituée d'une fine couche de matériau semiconducteur au sein de laquelle sont introduits des motifs périodiques pouvant typiquement être des trous. Un guide 12 est réalisé au niveau de cette membrane et matérialisé par une absence de motifs périodiques. Cette membrane est élaborée à la surface d'un substrat 10a qui peut comprendre avantageusement une couche dite sacrificielle 10b sur laquelle sont réalisés les motifs périodiques Mi en forme de trous réalisés au sein de la membrane 11.

Selon l'invention, le guide de photons est prolongé par un élément adaptateur 13 présentant un gradient de section sans motifs périodiques de manière à créer en sortie de guide une adaptation de mode.

Un avantage supplémentaire du circuit à cristal photonique de la présente invention réside dans la forte réduction des réflexions parasites aux facettes d'entrée/sortie, ce qui élimine la nécessité de traitement anti-reflets spécifiques qui sont nécessaires avec une rupture abrupte de la face de sortie d'un circuit à cristal photonique de l'art connu.

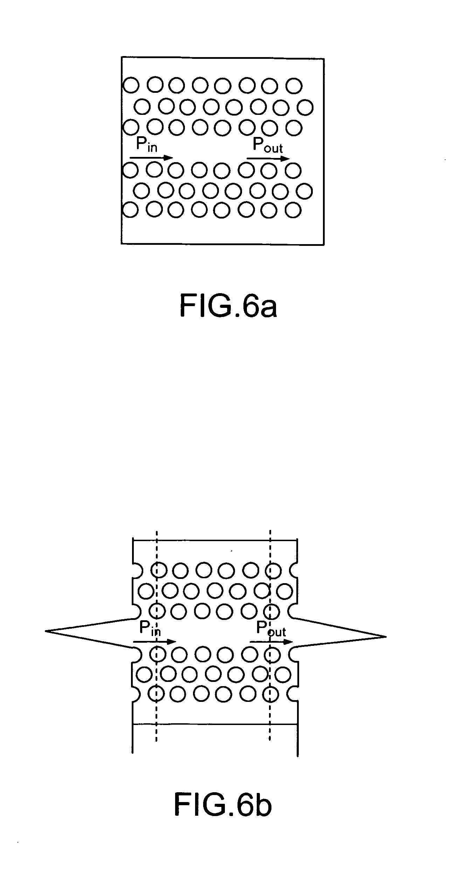

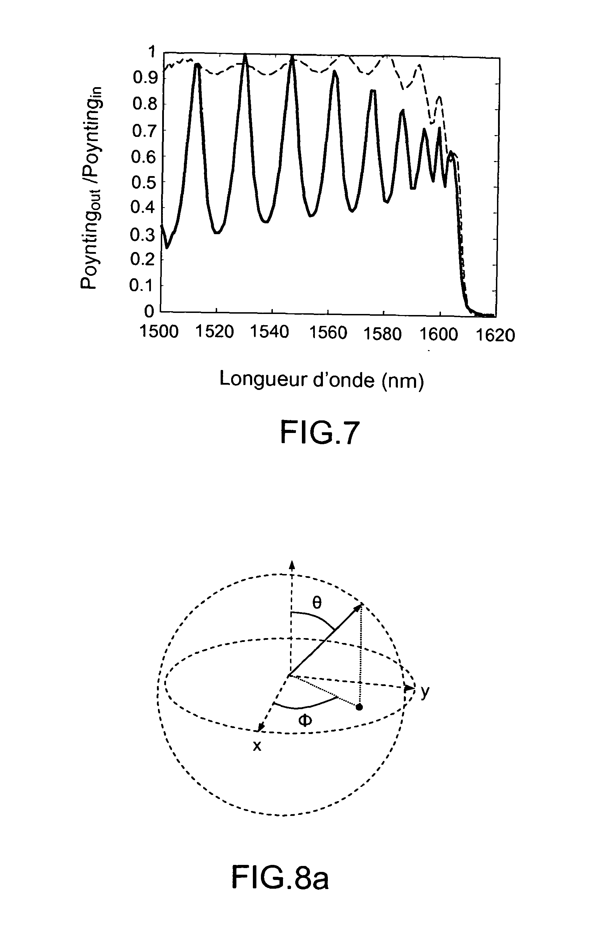

Des études ont permis de comparer la transmission normalisée d'une section de guide en cristal photonique avec et sans coupleur et mettent en évidence la suppression de réflexions parasites sur les terminaisons. A titre d'exemple les structures des figures 6a et 6b ont été évaluées en terme de transmission représentées sur la figure 7.

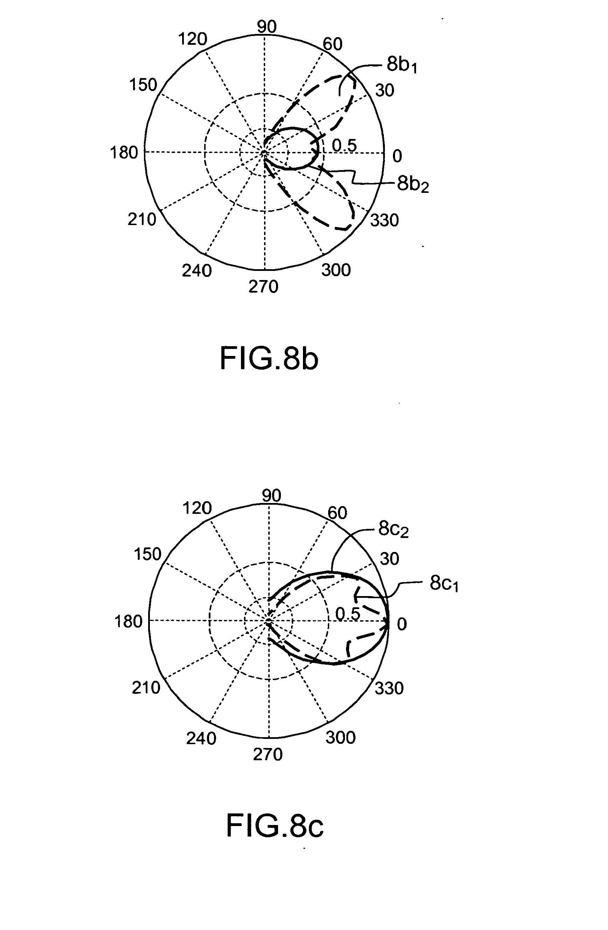

Les diagrammes de rayonnement de ces structures sont illustrés en figure 8b et 8c et font apparaître une meilleure directivité avec élément adaptateur. Les courbes en trait pointillés 8b₁ et 8c₁ sont relatives au plan sagittal, les courbes en traits gras 8b₂ et 8c₂ sont relatives au plan azimutal dans le repère de coordonnées polaires illustré en figure 8a.

L'apparition d'un mode quasi-circulaire traduit l'amélioration du couplage dans le cas de la structure avec pointe assurant la fonction d'adaptation.

Un des intérêts majeurs de la présente invention réside également dans la simplicité d'élaboration de la pointe en terminaison de guide qui peut être réalisée en même temps que les autres étapes technologiques que celles de fabrication du circuit à cristal photonique.

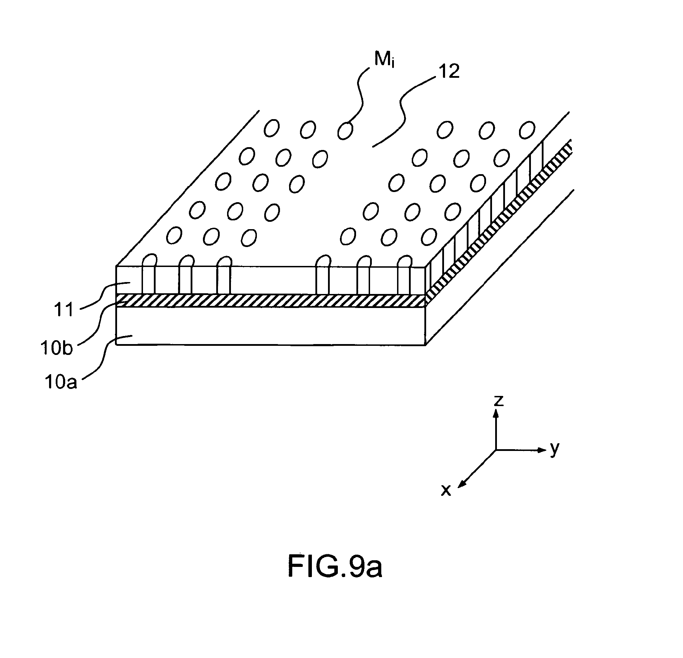

Nous allons décrire ci-après un exemple de circuit à cristal photonique selon l'invention et notamment à l'aide des figures 9a à 9c.

On réalise à la surface d'un substrat 10a, un empilement d'une couche sacrificielle 10b et d'une couche en matériau semiconducteur 11 assurant la fonction de membrane, dans laquelle on réalise des trous périodiques localement Mi, tout en conservant une zone sans motifs dédiée au guide 12 comme illustré en figure 9a.

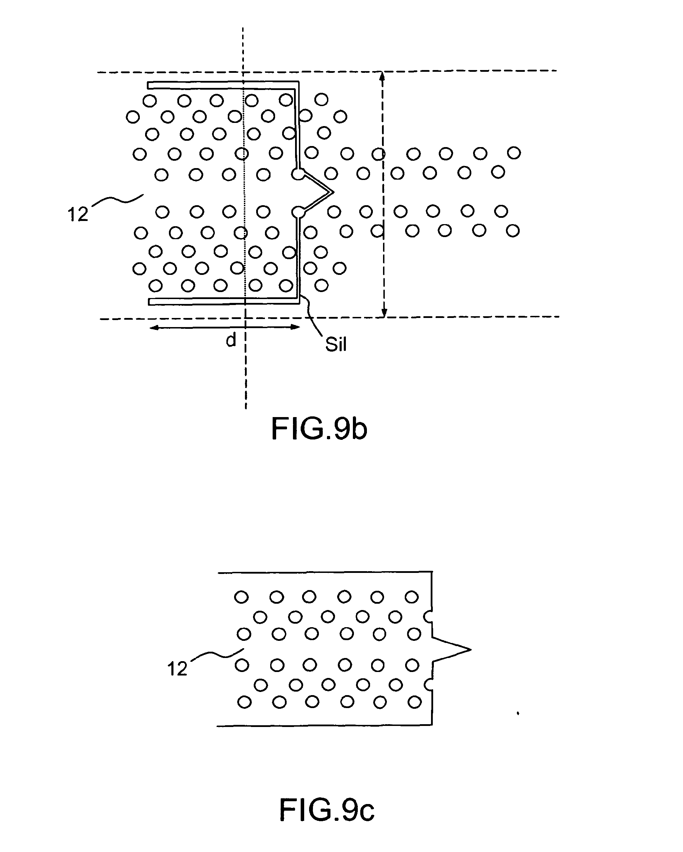

Selon une variante illustrée en figure 9b, on peut réaliser simultanément un sillon Sil en même temps que les trous, ledit sillon pouvant typiquement présenter une largeur d'environ 100 nm , la distance d représentée sur la figure 9b pouvant typiquement être de l'ordre de 10µm à 40µm ; cette valeur pouvant-être réduite selon les tolérances de clivage ainsi que la précision d'alignement des motifs par rapport au plan cristallin du semiconducteur.

On procède alors à une opération d'attaque chimique de la couche sacrificielle, permettant de dégager la partie inférieure de la pointe, permettant ainsi de définir l'élément adaptateur suspendu qui présente ainsi une symétrie parfaite entre ses faces inférieure et supérieure.

On procède enfin à une étape de clivage permettant d'isoler la pointe en bordure de guide comme illustré en figure 9c.

Le circuit à cristal photonique ainsi élaboré peut avantageusement être intégré dans un système optique. La pointe dudit circuit est couplée à une fibre optique dont une extrémité peut avantageusement être munie d'une lentille pouvant typiquement présenter une distance focale de l'ordre de 10 à 20 µm.

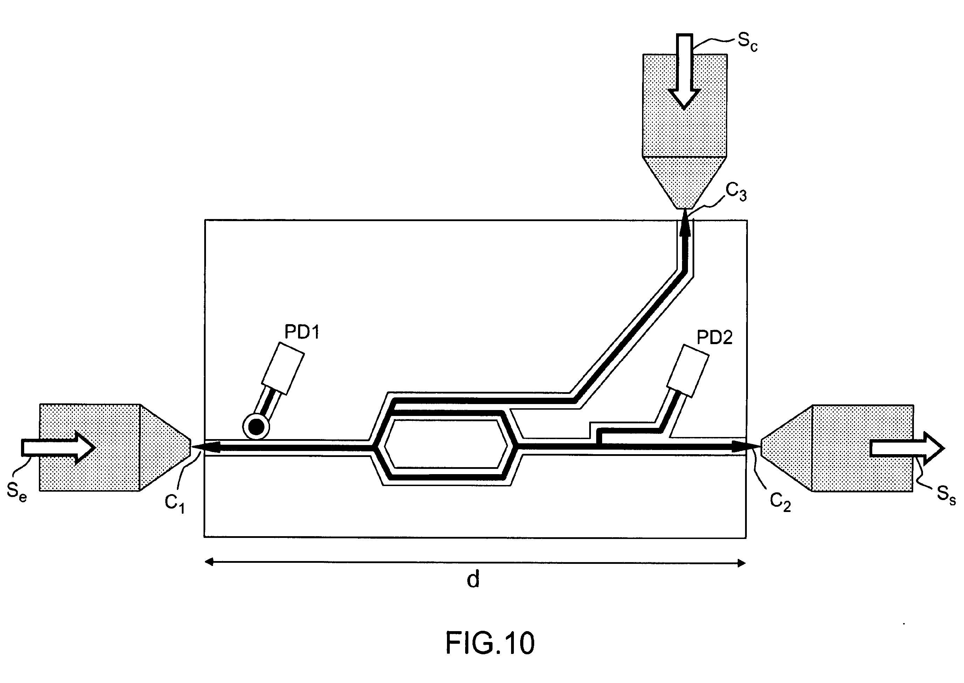

La figure 10 illustre un exemple d'application dans laquelle le cristal photonique équipé de sa partie adaptatrice assure la fonction de coupleur s'avère particulièrement intéressant.

Il s'agit d'un circuit à cristal photonique complexe avec des entrées-sorties basées sur la présente invention. A partir d'une porteuse ou signal d'entrée émettant un signal à la longueur d'onde λs, il est possible de faire interférer ladite onde signal avec une onde optique de commande à la longueur d'onde λc pour adresser un paquet d'informations de signaux optiques et générer un signal optique de sortie Ss.

Ainsi, des cristaux photoniques et leur pointe adaptatrice, dénommés coupleurs C₁, C₂ et C₃ permettent de coupler des signaux d'entrée Se et de commande Sc à des guides agencés de manière à réaliser une architecture d'interféromètre. Les guides sont réalisés au sein de cristaux photoniques de type membrane, par modification de la structure périodique, typiquement réalisée par absence de motifs.

Le dispositif comporte également des photodétecteurs PD1 et PD2, pour sélectionner des signaux résultant des interférences des signaux d'entrée et de commande et permettant d'échantillonner le signal porteur d'informations.

Typiquement, l'ensemble de l'encombrement d'un tel dispositif peut être extrêmement compact, la dimension d pouvant être de l'ordre de quelques millimètres.

## Revendications

1. Circuit à cristal photonique comportant un guide (12) réalisé dans une membrane (11) de cristal photonique à la surface d'un substrat (10a) et un adaptateur (13) de mode couplé audit guide **caractérisé en ce que** la membrane comporte une pointe centrale constitutive de l'adaptateur de mode présentant un gradient de section en terminaison dudit guide, ladite pointe étant suspendue de manière à transformer le mode du cristal photonique en un mode propagatif dans l'espace libre de type Gaussien.

2. Circuit à cristal photonique selon la revendication 1, **caractérisé en ce que** la membrane est en silicium.

3. Circuit à cristal photonique selon la revendication 1, **caractérisé en ce que** la membrane est en matériau de type III-V tel que GaAs, GaAlAs, GaInP, ou InP, GaInAsP.

4. Circuit à cristal photonique selon l'une des revendications 1 à 3, **caractérisé en ce que** l'épaisseur de la membrane est comprise entre environ 100 nanomètres et 300 nanomètres.

5. Circuit à cristal photonique selon l'une des revendications 1 à 4, **caractérisé en ce que** le cristal photonique comporte des motifs présentant une périodicité de l'ordre de quelques centaines de nanomètres.

6. Circuit à cristal photonique selon l'une des revendications 1 à 5, **caractérisé en ce que** les motifs du cristal photoniques sont des trous présentant des rayons de l'ordre de 120 à 130 nanomètres.

7. Procédé de fabrication d'un circuit à cristal photonique selon l'une des revendications 1 à 6, **caractérisé en ce qu'**il comporte les étapes suivantes :
- la réalisation d'un sillon à la surface de la membrane ;
- une opération d'attaque de la couche sacrificielle (10b)
- une opération de clivage permettant de dégager la pointe constitutive de l'adaptateur à partir du sillon préalablement réalisé ;

8. Procédé de fabrication d'un circuit photonique selon la revendication 7, **caractérisé en ce que** l'opération de réalisation d'un sillon est effectuée sur une largeur de l'ordre d'une centaine de nanomètres.

9. Système optique comportant un circuit photonique selon l'une des revendications 1 à 6, une optique adaptative et une fibre optique.

10. Système optique selon la revendication 9, **caractérisé en ce que** l'optique adaptative est de type micro-lentille ou lentille de type GRIN.

## Claims

1. A photonic crystal circuit comprising a guide (12) formed in a photonic crystal membrane (11) on the surface of a substrate (10a) and a mode adapter (13) coupled to said guide, **characterised in that** said membrane comprises a constitutive central point of the mode adapter having a gradient section at the termination of said guide, said point being suspended so as to convert the mode of the photonic crystal into a propagation mode in free space of the Gaussian type.

2. The photonic crystal circuit according to claim 1, **characterised in that** the membrane is made from silicon.

3. The photonic crystal circuit according to claim 1, **characterised in that** the membrane is a material of the III-V type such as GaAs, GaAIAs, GaInP or InP, GaInAsP.

4. The photonic crystal circuit according to any one of claims 1 to 3, **characterised in that** the thickness of the membrane is between approximately 100 nanometres and 300 nanometres.

5. The photonic crystal circuit according to any one claims 1 to 4, **characterised in that** the photonic crystal comprises patterns having a periodicity of the order of several hundred nanometres.

6. The photonic crystal circuit according to any one of claims 1 to 5, **characterised in that** the patterns of the photonic crystal are holes having radii of the order of 120 to 130 nanometres.

7. A method for manufacturing a photonic crystal circuit according to any one of claims 1 to 6, **characterised in that** it comprises the steps of:
- producing a groove on the surface of the membrane;
- carrying out an operation for attacking the sacrificial layer (10b);
- carrying out a cleaving operation for disengaging the constitutive point of the adapter from the previously produced groove.

8. The method for manufacturing a photonic circuit according to claim 7, **characterised in that** the operation for producing a groove is performed over a width of the order of one hundred nanometres.

9. An optical system comprising a photonic circuit according to any one of claims 1 to 6, an adaptive optic and a fibre optic.

10. The optical system according to claim 9, **characterised in that** the adaptive optic is of the micro-lens or GRIN lens type.

## Patentansprüche

1. Schaltung mit photonischem Kristall, die Folgendes umfasst: einen Leiter (12), der in einer Membran (11) aus photonischem Kristall auf der Oberfläche eines Substrats (10a) ausgebildet ist, und einen mit dem Leiter gekoppelten Modenadapter (13), **dadurch gekennzeichnet, dass** die Membran einen konstitutiven zentralen Punkt des Modenadapters mit einem Gradientenabschnitt als Abschluss des Leiters umfasst, wobei der Punkt so aufgehängt ist, der er die Mode des photonischen Kristalls in eine Ausbreitungsmode im freien Raum des Gauss'schen Typs konvertiert.

2. Schaltung mit photonischem Kristall nach Anspruch 1, **dadurch gekennzeichnet, dass** die Membran aus Silicium besteht.

3. Schaltung mit photonischem Kristall nach Anspruch 1, **dadurch gekennzeichnet, dass** die Membran aus einem Material des Typs III-V wie GaAs, GaAIAs, GaInP oder InP, GaInAsP besteht.

4. Schaltung mit photonischem Kristall nach einem der Ansprüche 1 bis 3, **dadurch gekennzeichnet, dass** die Dicke der Membran zwischen etwa 100 Nanometer und 300 Nanometer liegt.

5. Schaltung mit photonischem Kristall nach einem der Ansprüche 1 bis 4, **dadurch gekennzeichnet, dass** das photonische Kristall Muster mit einer Periodizität in der Größenordnung von mehreren hundert Nanometern hat.

6. Schaltung mit photonischem Kristall nach einem der Ansprüche 1 bis 5, **dadurch gekennzeichnet, dass** die Muster des photonischen Kristalls Löcher mit Radien in der Größenordnung von 120 bis 130 Nanometer sind.

7. Verfahren zur Herstellung einer Schaltung mit photonischem Kristall nach einem der Ansprüche 1 bis 6, **dadurch gekennzeichnet, dass** es die folgenden Schritte beinhaltet:
- Erzeugen einer Nut auf der Oberfläche der Membran;
- Durchführen eines Vorgangs zum Angreifen der Opferschicht (10b);
- Durchführen eines Spaltvorgangs zum Trennen des konstitutiven Punkts des Adapters von der zuvor erzeugten Nut.

8. Verfahren zur Herstellung einer photonischen Schaltung nach Anspruch 7, **dadurch gekennzeichnet, dass** der Vorgang zum Erzeugen einer Nut auf einer Breite in der Größenordnung von hundert Nanometern durchgeführt wird.

9. Optisches System, umfassend eine photonische Schaltung nach einem der Ansprüche 1 bis 6, eine adaptive Optik und eine Faseroptik.

10. Optisches System nach Anspruch 9, **dadurch gekennzeichnet, dass** die adaptive Optik vom Typ einer Mikrolinse oder einer GRIN-Linse ist.
